# EUROPEAN PATENT SPECIFICATION

(11) **EP 0 776 351 B1**
(45) Date of publication and mention of the grant of the patent: **14.10.1998**
(21) Application number: 95925589.4
(22) Date of filing: 10.07.1995
(51) Int. Cl.: C09J 7/02, E06B 5/00

(54) **LAMINATE FOR PRECISE APPLICATION OF GRAPHICS TO A SUBSTRATE**
LAMINAT ZUM GENAUEN ANBRINGEN VON BILDERN AUF EINEM SUBSTRAT
STRATIFIE PERMETTANT L'APPLICATION PRECISE DE MOTIFS GRAPHIQUES SUR UN SUBSTRAT

(30) Priority: 15.08.1994 US 290355
(43) Date of publication of application: 04.06.1997
(73) Proprietor: MINNESOTA MINING AND MANUFACTURING COMPANY, St. Paul, Minnesota 55133-3427 (US)
(72) Inventor: SUNDET, Douglas, C., Saint Paul, MN 55133-3427 (US)
(74) Representative: Meyers, Hans-Wilhelm, Dr.Dipl.-Chem.
(86) International application number: US9508611
(87) International publication number: WO9605262

(56) References cited:
- WO-A-94/14912
- US-A- 4 814 212

## Description

### Field of the Invention

The invention is primarily concerned with the application of designs and other graphics to smooth substrates and is particularly concerned with forming graphics on glass panes, which graphics appear to have been etched or sand-blasted into the glass.

### Description of the Related Art

The company to which this application is assigned manufactures vinyl films which can be applied to glass panes to form graphics that appear to have been etched or sand-blasted into the glass at a fraction of the cost of actual etching or sand blasting. These vinyl films, typically plasticized poly(vinyl chloride), are marketed as Scotchcal^{TM} Series 7725 special effects films. Among these, Scotchcal^{TM} 7725-314 Dusted Crystal Film gives the appearance of etched glass, and Scotchcal^{TM} 7725-324 Frosted Crystal Film gives the decorative appearance of sand-blasted glass. Each of these is translucent white. The ability to form such graphics makes it economically feasible to warn persons, in a visually attractive manner, not to walk into a large glass panel that otherwise might be mistaken for a door. Both decorations and messages (below collectively called "graphics") may be used in any such warning.

Each of these special effects vinyl films bears a layer of aggressive pressure-sensitive adhesive and a low-adhesion carrier web that protects the adhesive. The pressure-sensitive adhesive is selected to form strong bonds to glass.

In use, graphics are cut into the special effects vinyl film without cutting through the carrier web, and the adhesive-bearing weed is peeled from the carrier web and discarded. A piece of paper that bears a removable pressure-sensitive adhesive (here called a "premask") is temporarily adhered by that adhesive to the exposed faces of the graphics. The low-adhesion carrier web is removed to expose remaining areas of aggressive pressure-sensitive adhesive. Both the adhesive side of the paper-covered graphics and a glass panel are wet with a solution of non-creamy dish detergent and rubbing alcohol in water. The wet, aggressive pressure-sensitive adhesive covering the graphics is pressed against the wet panel, and the detergent/alcohol/water solution is allowed to evaporate until the graphics have become bonded to the panel. The premask is then peeled off to expose the graphics.

The detergent/alcohol/water solution has two functions. First, when using a squeegee, the solution aids in eliminating air from the interface between the graphics and the glass panel. Second, the solution permits the graphics to be repositioned to a desired location, based on measurements made before the solution is applied. Such measurements are necessary because the graphics cannot be seen through the sheet of paper. Because the difficulty of making and using those measurements, the special effects vinyl films have been marketed primarily for application by skilled artisans.

In addition to being used to form graphics on glass panels to achieve an etched or sand-blasted appearance, special effects vinyl films are applied in the same manner to form other graphics on various substrates such as the side of a truck or other automotive vehicle.

A number of additional commercial products are used to apply graphics to glass panels and to other substrates. In several of these, the outer sheet that covers the graphics-forming layer is transparent or translucent, e.g., a polypropylene film. Illustrative is SCTT-10 application tape manufactured by the company to which this application is assigned.

### Summary of the Invention

The laminate of the present invention makes it easy to apply graphics with precision. For example, the novel laminate should make it feasible for the do-it-yourself market to apply graphics that give an etched or sand-blasted appearance to glass panes. Furthermore, the ease with which they can be applied should allow skilled artisans to apply graphics more quickly and with less risk of mispositioning, as compared to applying prior special effects films.

Briefly, the laminate of the present invention includes:
1) a transparent polymeric cover sheet which is formed with closely spaced vents over its entire area,
2) a layer of removable pressure-sensitive adhesive that is coextensive with the vented polymeric cover sheet,
3) polymeric film graphics, and
4) a layer of aggressive pressure-sensitive adhesive that is coextensive with each of the graphics.
The term "vents" includes perforations, slits, channels, and the like.

A flexible low-adhesion carrier web which is coextensive with the vented cover sheet can protect the aggressive pressure-sensitive adhesive and areas of the removable pressure-sensitive adhesive that otherwise would be exposed.

The decorative graphics-forming polymeric film can be a vinyl film which gives the appearance of etched or sand-blasted glass like the Scotchcal^{TM} Series 7725 special effects films. As was done with the prior special effects films, graphics are cut into the decorative polymeric film and its aggressive pressure-sensitive adhesive without cutting through the low-adhesion carrier web, and the adhesive-bearing weed is peeled from the flexible carrier web and discarded. Preferably the peeling step promptly follows the cutting step, before the aggressive pressure-sensitive adhesive can flow back across the cuts. Then a vented transparent cover sheet is adhered by the removable adhesive to the graphics as well as to exposed areas of the low-adhesion carrier web to complete the novel laminate.

The removable pressure-sensitive adhesive is selected to form a bond to the graphics that both (a) permits the low-adhesion carrier web to be peeled away without disrupting that bond and (b) permits the vented cover sheet to be peeled cleanly from the graphics without disrupting the adhesive bond between the graphics and a glass pane or other substrate to which the graphics are being applied.

After removing the low-adhesion carrier web to expose the underlying adhesive areas and wetting the exposed adhesive areas with the above-described detergent/alcohol/water solution, the wet adhesive areas can be pressed against a wet substrate and a squeegee can be used to eliminate any air between the graphics and the substrate. Because the vented cover sheet is transparent, the user is able to see both the graphics and the underlying substrate and hence is able to reposition the laminate and its graphics with precision until the solution has evaporated through the vents of the cover sheet and the graphics have become bonded to the substrate. The vented polymeric cover sheet can be almost opaque, requiring just enough transparency to enable the user to see margins of the graphics while the laminate is wet with the solution.

After the graphics have become bonded to the substrate, the cover sheet is peeled off with its removable adhesive, thus exposing the graphics.

The vents should be closely and uniformly spaced over substantially the full area of the transparent polymeric cover sheet. They preferably are of uniform size and shape, ideally circular perforations, from 0.02 to 0.1 inch (0.5 to 2.5 mm) in diameter, and separated by lands of from 0.04 to 0.4 inch (1 to 10 mm). The vents preferably occupy from 1.0 to 20% of the area of the cover sheet. Toward the higher end of that range, the solution can evaporate more quickly. On the other hand, vented cover sheets near or above the higher end of that range might be hard to handle, both in the manufacture of the novel laminate and when removing the vented cover sheet after the laminate has been applied to a substrate.

One benefit afforded by the vents is that they provide avenues of escape for air that a squeegee may bring to the edges of the graphics. Additionally, the vented transparent polymeric cover sheet provides two unanticipated benefits. First, the vents, when in an orderly pattern such as a rectangular grid, have been found to facilitate positioning of the graphics on a substrate. Second, when the aforementioned detergent/alcohol/water solution is used for applying the laminate to a substrate, the appearance of the laminate turns from cloudy to clear as the solution evaporates through the vents. Clearing emanates radially from each of the vents, and a clear border gradually appears at the edges of the graphics. Each of these effects provides a visual indication to the user that the vented cover sheet can be peeled away without disturbing the graphics.

### Description of the Preferred Embodiments

In a preferred laminate of the present invention:
1) the vented transparent polymeric cover sheet is a plasticized vinyl film from 0.5 to 6 mils (12.5 to 150 µm) in thickness, and its vents are circular perforations of uniform size ranging from 0.015 to 0.2 inch (0.4 to 5 mm) in diameter and are separated by uniform lands of from 0.04 to 0.4 inch (1 to 10 mm) between adjacent perforations;
2) the removable pressure-sensitive adhesive is based on hollow tacky microspheres as disclosed in co-assigned U.S. Pat. No. 5,045,569 (Delgado) or solid tacky microspheres as disclosed in co-assigned U.S. Pat. No. 3,691,140 (Silver) and has a coating weight of from 10 to 50 g/m², preferably toward the low end of this range for economy but not so thin as to be deficient in bonding strength;
3) said decorative polymeric film is a special effects vinyl film that can give an etched or sand-blasted appearance to graphics on a glass panel and is from 0.5 to 4 mils (12.5 to 100 µm) in thickness, preferably toward the thin end of that range to afford a desirably low profile but not so thin as to lack the desired visual effect; and
4) the layer of aggressive pressure-sensitive adhesive has a coating weight of from 10 to 50 g/m², preferably toward the thin end of that range to afford a low profile but not but not so thin as to be deficient in bonding strength.
The laminate should be marketed as a composite wherein a flexible low-adhesion carrier web protects the adhesives and has good dimensional stability so that the graphics do not become distorted.

When the vented transparent polymeric cover sheet and decorative polymeric film are made from the same polymer, they will have the same thermal expansion characteristics, thus affording good resistance to wrinking when exposed to adverse environmental conditions during shipment and storage. Preferably each is plasticized poly(vinyl chloride) which is inexpensive, reasonably durable, and easy to handle in manufacture. Also useful for both the vented transparent polymeric cover sheet and the decorative polymeric film are polypropylene, polyolefins, acetates, and polyesters such as biaxially oriented poly(ethyleneterephthalate) film. Because the latter is quite strong, it would permit the vented cover sheet to be as thin as about 0.5 mil (12.5 µm).

The construction of the preferred laminate can better be understood in connection with the drawing.

### Brief Description of the Drawing

In the drawing, all figures of which are schematic:
Figure 1 shows the face of a fragment of a laminate according to the present invention which is supported by a flexible low-adhesion carrier web;
Figure 2 is a cross-sectional view taken approximately along line 2-2 of Figure 1;
Figure 3 shows the face of the laminate of Figure 1 after the carrier web has been peeled away and the laminate has been laid onto a glass substrate while wet with a detergent/alcohol/water solution;
Figure 4 is a cross-sectional view taken approximately along line 4-4 of Figure 3; and
Figure 5 is a cross-sectional view taken approximately along line 4-4 of Figure 3 after the a vented cover sheet included in the laminate has been peeled off and discarded.

### Detailed description of the Drawing

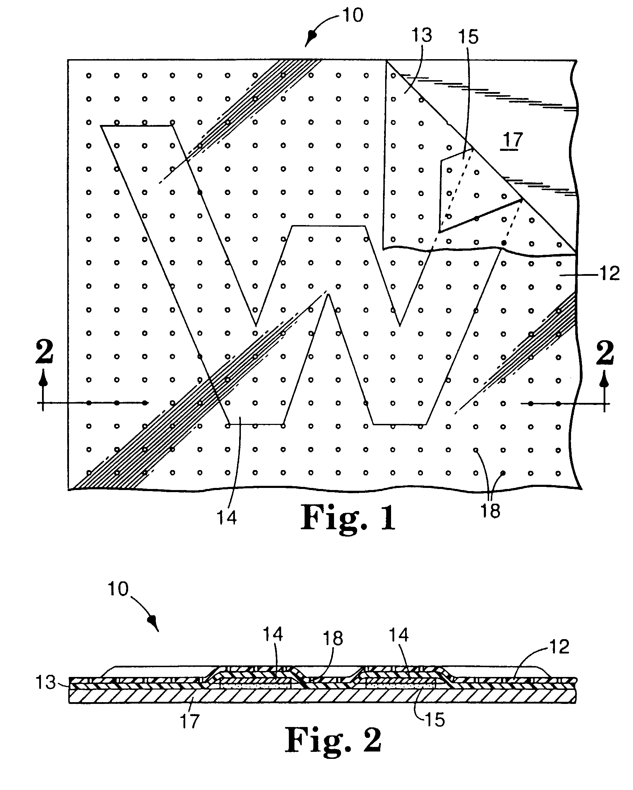

Referring now to Figures 1 and 2, there is illustrated a laminate 10 according to the present invention that comprises, in order, a vented transparent polymeric cover sheet 12, a layer of removable pressure-sensitive adhesive 13, decorative polymeric film graphics 14 (one letter is shown), and a layer of aggressive pressure-sensitive adhesive 15 that is coextensive with each of the graphics. A flexible low-adhesion carrier web 17 that is coextensive with the vented cover sheet protects the aggressive pressure-sensitive adhesive 15 and areas of the removable pressure-sensitive adhesive between the graphics. The vents of the transparent cover sheet 12 are circular perforations 18 in a rectangular grid.

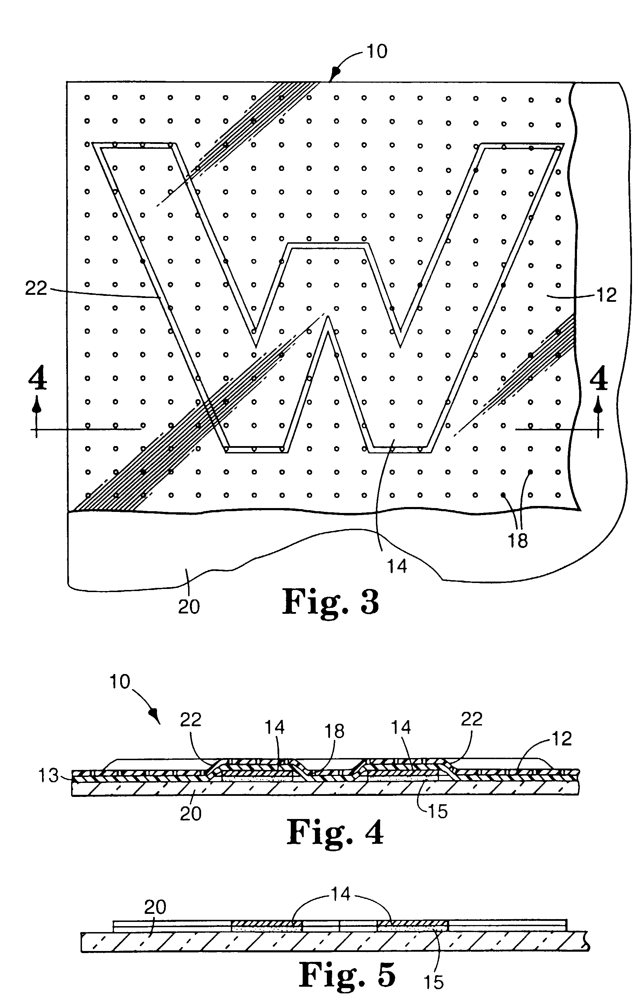

After the carrier web 17 has been peeled off and discarded, the adhesive face of the laminate is wet (by blotting or spraying) with a detergent/alcohol/water solution, as is a substrate 20 (see Figures 3 and 4). The adhesive face is placed against the wet substrate 20, and a squeegee such as a piece of plastic can be used to push solution and air bubbles from beneath each of the graphics. At this point, the laminate 10 has a cloudy appearance. After allowing the solution to evaporate at room temperature, a clear border 22 appears at the edges of the graphics 14 as shown in Figure 3. The appearance of these borders indicates that the vented transparent cover sheet 12 can be peeled away without disturbing the graphics 14, leaving the graphics 14 on the substrate 20 as is illustrated in Figure 5.

### Examples

### Example 1:

A laminate 10 as shown in FIG. 1 has been made, using as the vented transparent polymeric cover sheet 12 plasticized poly(vinyl chloride) film having a thickness of 4 mils (100 µm). The decorative polymeric film from which the graphics 14 were formed was identical to the special effects vinyl film of the above-cited Scotchcal^{TM} 7725-314 Frosted Crystal Film. More specifically, the decorative vinyl film was plasticized poly(vinyl chloride) that had been filled with light-diffusing agents, including flecks of aluminum-vapor-coated polyester film, to afford a frosted appearance. The perforations 18, which had been formed by laser machining, were circular, 0.04 inch (1 mm) in diameter, and provided a rectangular grid. The perforations were separated by lands of about 3/16 inch (4.8 mm). Mechanical perforations would probably be formed more economically in production.

The graphics 14 had been cut out by a computer-controlled knife from the decorative vinyl film when it was coextensive with the vented cover sheet 12. In production, it probably would be more economical to form the graphics with a die cutter. After cutting the graphics, the adhesive-bearing weed was peeled off and discarded from the laminate 10.

The removable pressure-sensitive adhesive 13 comprised hollow tacky microspheres as disclosed in the above-cited Delgado patent and had a coating weight of 7 grains/24 in² (29 g/m²). Such a removable pressure-sensitive adhesive is preferred, because it has good aging properties and good adhesion to the vented transparent polymeric cover sheet while releasing cleanly from special effects vinyl films. This combination of properties is not reliably achieved, to the best of my knowledge, in any pressure-sensitive adhesive other than those that are based on tacky microspheres.

The aggressive pressure-sensitive adhesive 15 was a copolymer of isooctyl acrylate and acrylic acid as disclosed in U.S. Pat. No. Re. 24,906 (Ulrich) and had a coating weight of 9.6 grains/24 in² (40 g/m²). The carrier web 17 was a silicone-release paper liner.

After removing the carrier web 17, both the adhesive face of the laminate and a clear glass panel 4 inches (10 cm) square were wet with a solution of (by weight) 80 parts water, 19.7 parts of isopropyl alcohol, and 0.3 part of Joy^{TM} dish-washing detergent. The adhesive face was placed against the glass panel 20, and a piece of plastic was used to push solution and air bubbles from beneath each element of the graphics 14. After about two hours at room temperature, a clear border 22 appeared at the edges of the graphics 14 (see FIG. 4), and the vented transparent cover sheet 12 was peeled off, carrying with it the entire removable adhesive layer 13. The graphics were thus firmly bonded to the glass 20 and had the appearance of sand-blasted glass. Close visual inspection revealed no air bubbles at the interfaces between the graphics 14 and the glass panel 20.

The foregoing procedure was repeated, except using a glass panel that had been in a refrigerator at a temperature of 40°F (4°C) and returning the panel to the refrigerator as soon as the laminate had been applied. After about 24 hours, the vented polymeric cover sheet was peeled off without disturbing the graphics. This showed that the laminate of the invention can be used to apply graphics to glass windows when they are chilled by cold weather.

Examples 2 and 3: A series of laminates were made in the same way as in Example 1 except having perforations of other diameters and land widths. Each was tested in the same manner as was the laminate of Example 1. As soon as a clear border appeared, the perforated transparent polymeric cover sheet was peeled off without disturbing the graphics. The test results are noted in Table I which also includes Example 1 plus results of testing a Comparative Laminate that was made in the same way as in Example 1 except that the transparent polymeric cover sheet was imperforate.

**TABLE I**

| Ex | Diameter of Perfs | | Land Widths | | Vented Areas | Removal Times @ | |
|---|---|---|---|---|---|---|---|
| | | | | | | 40°F(4°C) | 70°F(21°C) |
| | inches | mm | inches | mm | % | hours | hours |
| 1 | 0.015 | 0.4 | 0.105 | 2.7 | 1.7 | 24 | 2 |
| 2 | 0.035 | 0.9 | 0.05 | 1.3 | 14.0 | 8 | 1.5 |
| 3 | 0.015 | 0.4 | 0.25 | 6.35 | 0.2 | 144 | 48 |
| Comparative Laminate imperforate | | | | | | 480 | 168 |

## Claims

1. A laminate by which graphics can be precisely applied to a substrate, which laminate comprises in order:
1) a transparent polymeric cover sheet having. spaced vents over its entire area,
2) a layer of removable pressure-sensitive adhesive that is coextensive with the vented cover sheet,
3) polymeric film graphics, and
4) a layer of pressure-sensitive adhesive that is coextensive with each of the graphics.

2. A laminate as defined in claim 1 wherein the vents are uniformly spaced over substantially the full area of the cover sheet and occupy from 1.0 to 20% of the area of the cover sheet.

3. A laminate as defined in claim 2 wherein the vents are circular perforations of substantially uniform diameter within the range of 0.5 to 2.5 mm.

4. A laminate as defined in claim 3 wherein the perforations are separated by lands of from 1 to 10 mm.

5. A laminate as defined in claim 1 wherein the vents of the vented cover sheet form an orderly pattern.

6. A laminate as defined in claim 5 wherein the orderly pattern is a rectangular grid.

7. A laminate as defined in claim 1 wherein the polymeric film comprises a special effects vinyl film that gives an etched or sand-blasted appearance to the graphics when they are adhered by the aggressive pressure-sensitive adhesive to a glass panel.

8. A laminate as defined in claim 1 wherein a flexible low-adhesion carrier web protects the aggressive pressure-sensitive adhesive and areas of the removable pressure-sensitive adhesive between the graphics.

9. A laminate as defined in claim 8 wherein the removable adhesive is selected (a) to form a bond to the graphics that permits the low-adhesion carrier web to be peeled away without disrupting that bond and (b) to permit the vented cover sheet to be peeled cleanly from the graphics without disrupting the adhesive bond between the graphics and a substrate which is to receive the graphics.

10. A laminate as defined in claim 1 wherein the polymeric film comprises vinyl film filled with light-diffusing agents.

11. A laminate as defined in claim 1 wherein the vented cover sheet comprises a vinyl film.

12. A laminate as defined in claim 10 wherein the vinyl film is from 50 to 150 µm in thickness.

13. A laminate as defined in claim 1 wherein the vented cover sheet and the polymeric film graphics are made from substantially the same polymeric material.

14. A laminate as defined in claim 13 wherein said polymeric material comprises plasticized poly(vinyl chloride).

15. A composite by which graphics can be precisely applied to a substrate, which composite includes a laminate that comprises in sequence:
1) a transparent plasticized vinyl cover sheet which is from 25 to 100 pm in thickness and is formed with circular perforations that a) are uniformly spaced over substantially the full area of the cover sheet, b) occupy from 1.0 to 20% of the area of the cover sheet, c) are 0.5 to 2.5 mm in diameter, and d) are separated by lands of from 1 to 10 mm;
2) a layer of removable pressure-sensitive adhesive that is coextensive with the cover sheet and has a coating weight of from 10 to 50 g/m²;
3) a decorative plasticized vinyl film which a) forms graphics, b) is filled with light-diffusing agents that can give an etched or sand-blasted appearance to the graphics on a glass panel, and c) is from 25 to 100 pm in thickness; and
4) a layer of aggressive pressure-sensitive adhesive that is coextensive with each of the graphics and has a coating weight of from 10 to 50 g/m²; and
a flexible low-adhesion carrier web, which has good dimensional stability and is coextensive with the perforated cover sheet, protects the aggressive pressure-sensitive adhesive and areas of removable pressure-sensitive adhesive between the graphics.

16. Method of making a laminate by which graphics can be precisely applied to a substrate, which method comprises the steps of:
1) applying a layer of aggressive pressure-sensitive adhesive to a flexible low-adhesion carrier web,
2) applying a decorative polymeric film to the layer of aggressive pressure-sensitive adhesive,
3) cutting graphics into the decorative polymeric and the aggressive pressure-sensitive adhesive without cutting through the carrier web,
4) removing and discarding the adhesive-bearing weed between the graphics,
5) applying a layer of removable pressure-sensitive adhesive to a transparent polymeric sheet that is vented over its entire area, and
6) adhering the vented transparent polymeric sheet to the exposed faces of the graphics by the layer of removable pressure-sensitive adhesive.

17. Method of applying graphics to a substrate, which method comprises carrying out the six steps of claim 16 followed by the steps of:
7) removing the carrier web, thus exposing the aggressive pressure-sensitive adhesive,
8) wetting the exposed adhesive areas and the substrate with a detergent/alcohol/water solution,
9) placing the wet adhesive areas against the wet substrate,
10) allowing the solution to evaporate through the vents of the transparent polymeric sheet and, when a clear border appears at the edges of the graphics,
11) peeling off the adhesive-bearing vented polymeric sheet to expose the graphics.

18. Method of applying graphics to a substrate as defined in claim 17 and further comprising, subsequent to step 9), the step of repositioning graphics on the substrate.

## Patentansprüche

1. Laminat, durch das Graphiken genau auf ein Substrat aufgebracht werden können, wobei das Laminat in dieser Reihenfolge umfaßt:
1) eine transparente polymere Deckfolie, die Luftlöcher aufweist, die in Abständen über ihre ganze Fläche verteilt sind;
2) eine Schicht eines entfernbaren Haftklebers, die sich genauso weit wie die mit Luftlöchern versehene Deckfolie erstreckt;
3) Graphiken in Form einer Polymerfolie; sowie
4) eine Schicht eines Haftklebers, die sich genauso weit wie jede der Graphiken erstreckt.

2. Laminat gemäß Anspruch 1, wobei die Luftlöcher in gleichmäßigen Abständen über im wesentlichen die volle Fläche der Deckfolie verteilt sind und 1,0 bis 20% der Fläche der Deckfolie einnehmen.

3. Laminat gemäß Anspruch 2, wobei die Luftlöcher kreisförmige Perforationen mit im wesentlichem gleichmäßigem Durchmesser im Bereich von 0,5 bis 2,5 mm sind.

4. Laminat gemäß Anspruch 3, wobei die Perforationen durch Stege von 1 bis 10 mm voneinander getrennt sind.

5. Laminat gemäß Anspruch 1, wobei die Luftlöcher der mit Luftlöchern versehenen Deckfolie ein regelmäßiges Muster bilden.

6. Laminat gemäß Anspruch 5, wobei das regelmäßige Muster ein rechteckiges Gitter ist.

7. Laminat gemäß Anspruch 1, wobei die Polymerfolie eine Spezialeffekt-Vinylfolie umfaßt, die den Graphiken ein geätztes oder sandgestrahltes Aussehen verleiht, wenn sie durch den aggressiven Haftkleber an eine Glasscheibe geklebt werden.

8. Laminat gemäß Anspruch 1, wobei eine flexible Trägerbahn mit geringer Haftung den aggressiven Haftkleber und Bereiche des entfernbaren Haftklebers zwischen den Graphiken schützt.

9. Laminat gemäß Anspruch 8, wobei der entfernbare Kleber so ausgewählt ist, daß er (a) eine Bindung zu den Graphiken bildet, die es ermöglicht, die Trägerbahn mit geringer Haftung abzuziehen, ohne diese Bindung zu zerstören, und (b) es ermöglicht, die mit Luftlöchern versehene Deckfolie sauber von den Graphiken abzuziehen, ohne die Klebeverbindung zwischen den Graphiken und einem Substrat, das die Graphiken aufnehmen soll, zu zerstören.

10. Laminat gemäß Anspruch 1, wobei die Polymerfolie eine mit lichtstreuenden Mitteln gefüllte Vinylfolie umfaßt.

11. Laminat gemäß Anspruch 1, wobei die mit Luftlöchern versehene Deckfolie eine Vinylfolie umfaßt.

12. Laminat gemäß Anspruch 10, wobei die Vinylfolie 50 bis 150 µm dick ist.

13. Laminat gemäß Anspruch 1, wobei die mit Luftlöchern versehene Deckfolie und die Graphiken in Form einer Polymerfolie im wesentlichen aus demselben polymeren Material hergestellt sind.

14. Laminat gemäß Anspruch 13, wobei das polymere Material weichgemachtes Polyvinylchlorid umfaßt.

15. Verbundstoff, durch den Graphiken genau auf ein Substrat aufgebracht werden können, wobei der Verbundstoff ein Laminat, das in dieser Reihenfolge:
1) eine transparente Deckfolie aus weichgemachtem Vinyl, die 25 bis 100 µm dick ist und mit kreisförmigen Perforationen gebildet ist, die a) in gleichmäßigen Abständen über im wesentlichen die volle Fläche der Deckfolie verteilt sind, b) 1,0 bis 20% der Fläche der Deckfolie einnehmen, c) einen Durchmesser von 0,5 bis 2,5 mm haben und d) durch Stege von 1 bis 10 mm voneinander getrennt sind;
2) eine Schicht eines entfernbaren Haftklebers, die sich genauso weit wie die Deckfolie erstreckt und ein Beschichtungsgewicht von 10 bis 50 g/m² hat;
3) eine Dekorfolie aus weichgemachtem Vinyl, die a) Graphiken bildet, b) mit lichtstreuenden Mitteln gefüllt ist, die den Graphiken auf einer Glasscheibe ein geätztes oder sandgestrahltes Aussehen verleihen können, und c) 25 bis 100 µm dick ist; sowie
4) eine Schicht eines aggressiven Haftklebers, die sich genauso weit wie jede der Graphiken erstreckt und ein Beschichtungsgewicht von 10 bis 50 g/m² hat;
umfaßt, sowie eine flexible Trägerbahn mit geringer Haftung, die eine gute Formbeständigkeit aufweist und sich genauso weit wie die perforierte Deckfolie erstreckt und den aggressiven Haftkleber und Bereiche des entfernbaren Haftklebers zwischen den Graphiken schützt, umfaßt.

16. Verfahren zur Herstellung eines Laminats, durch das Graphiken genau auf ein Substrat aufgebracht werden können, wobei das Verfahren die Schritte umfaßt:
1) Auftragen einer Schicht von aggressivem Haftkleber auf eine flexible Trägerbahn mit geringer Haftung;
2) Auftragen einer polymeren Dekorfolie auf die Schicht des aggressiven Haftklebers;
3) Schneiden von Graphiken in die polymere Dekorfolie und den aggressiven Haftkleber, ohne durch die Trägerbahn zu schneiden;
4) Entfernen und Verwerfen des klebstofftragenden Abfalls zwischen den Graphiken;
5) Auftragen einer Schicht von entfernbarem Haftkleber auf eine transparente Polymerfolie, die auf ihrer gesamten Fläche mit Luftlöchern versehen ist; und
6) Kleben der mit Luftlöchern versehenen transparenten Polymerfolie auf die freiliegenden Flächen der Graphiken durch die Schicht des entfernbaren Haftklebers.

17. Verfahren zum Auftragen von Graphiken auf ein Substrat, wobei das Verfahren das Durchführen der sechs Schritte von Anspruch 16 und anschließend der folgenden Schritte umfaßt:
7) Entfernen der Trägerbahn, so daß der aggressive Haftkleber freigelegt wird;
8) Benetzen der freiliegenden Kleberflächen und des Substrats mit einer Detergens/Alkohol/Wasser-Lösung;
9) Plazieren der nassen Kleberflächen auf dem nassen Substrat;
10) Verdampfenlassen der Lösung durch die Luftlöcher der transparenten Polymerfolie; und, wenn eine klare Grenzlinie an den Rändern der Graphiken erscheint,
11) Abziehen der klebstofftragenden, mit Luftlöchern versehenen Polymerfolie, so daß die Graphiken freiliegen.

18. Verfahren zum Auftragen von Graphiken auf ein Substrat gemäß Anspruch 17, das weiterhin den Schritt des Repositionierens von Graphiken auf dem Substrat im Anschluß an Schritt 9) umfaßt.

## Revendications

1. Stratifié grâce auquel des motifs graphiques peuvent être appliqués de façon précise à un substrat, lequel stratifié comprend dans l'ordre :
1) une feuille polymère recouvrante et transparente ayant des orifices espacés sur sa surface entière,
2) une couche d'adhésif sensible à la pression détachable qui est de même étendue que la feuille polymère recouvrante perforée,
3) des motifs graphiques de film polymère, et
4) une couche d'adhésif sensible à la pression accrocheur qui est de même étendue que chacun des motifs graphiques.

2. Stratifié selon la revendication 1, dans lequel les orifices sont espacés de façon uniforme pratiquement sur la surface entière de la feuille recouvrante et occupent de 1,0 à 20% de la surface de la feuille recouvrante.

3. Stratifié selon la revendication 2, dans lequel les orifices sont des perforations circulaires de diamètre pratiquement .uniforme compris entre 0,5 et 2,5 mm.

4. Stratifié selon la revendication 3, dans lequel les perforations sont séparées par des zones comprises entre 1 et 10 mm.

5. Stratifié selon la revendication 1, dans lequel les orifices de la feuille recouvrante perforée forment un schéma ordonné.

6. Stratifié selon la revendication 5, dans lequel le schéma ordonné est une grille rectangulaire.

7. Stratifié selon la revendication 1, dans lequel le film polymère comprend un film vinylique à effets spéciaux qui donne un aspect gravé ou sablé aux motifs graphiques lorsqu'ils sont collés à l'aide de l'adhésif sensible a la pression accrocheur à un panneau de verre.

8. Stratifié selon la revendication 1, dans lequel une toile support flexible à faible adhérence protège l'adhésif sensible à la pression accrocheur et les surfaces de l'adhésif sensible à la pression détachable entre les motifs graphiques.

9. Stratifié selon la revendication 8, dans lequel l'adhésif détachable est choisi (a) pour former une liaison envers les motifs graphiques qui permet à la toile support à faible adhérence d'être détachée sans rompre cette liaison et (b) pour permettre à la feuille recouvrante perforée d'être détachée proprement à partir des motifs graphiques sans rompre la liaison adhésive entre les motifs graphiques et un substrat qui est destiné à recevoir les motifs graphiques.

10. Stratifié selon la revendication 1, dans lequel le film polymère comprend un film vinylique chargé avec des agents diffusant la lumière.

11. Stratifié selon la revendication 1, dans lequel la feuille recouvrante perforée comprend un film vinylique.

12. Stratifié selon la revendication 10, dans lequel le film vinylique a une épaisseur de 50 à 150 µm.

13. Stratifié selon la revendication 1, dans lequel la feuille recouvrante perforée et les motifs graphiques du film polymère sont fabriqués essentiellement à partir de la même matière polymère.

14. Stratifié selon la revendication 13, dans lequel ladite matière polymère comprend un poly(chlorure de vinyle) plastifié.

15. Composite grâce auquel des motifs graphiques peuvent être appliqués précisément à un substrat, ledit composite inclue un stratifié qui comprend dans l'ordre :
1) une feuille vinylique plastifiée recouvrante et transparente qui a une épaisseur de 25 à 100 µm et qui est formée avec des perforations circulaires qui a) sont espacées uniformément sur pratiquement la surface entière de la feuille recouvrante, b) occupent de 1,0 à 20 % de la surface de la feuille recouvrante, c) sont d'un diamètre de 0,5 à 2,5 mm, et d) sont séparés par des zones de 1 à 10 mm ;
2) une couche d'adhésif sensible à la pression détachable qui est de même étendue que la feuille polymère recouvrante et qui possède un grammage de revêtement compris entre 10 et 50 g/m² ;
3) un film vinylique plastifié décoratif qui a) forme des motifs graphiques, b) est chargé avec des agents diffusant la lumière qui peuvent donner un aspect gravé ou sablé aux motifs graphiques sur un panneau de verre, et c) est d'une épaisseur de 25 à 100 µm, et
4) une couche d'adhésif sensible à la pression accrocheur qui est de même étendue que chacun des motifs graphiques et possède un grammage de revêtement compris entre 10 et 50 g/m² ; et
une toile support flexible à faible adhérence, qui possède une bonne stabilité dimensionnelle, et qui est de même étendue que la feuille recouvrante perforée, protège l'adhésif sensible à la pression accrocheur et les surfaces d'adhésif sensible à la pression détachable compris entre les motifs graphiques.

16. Procédé de fabncation d'un stratifié grâce auquel des motifs graphiques peuvent être appliqués de façon précise, procédé qui comprend les étapes consistant :
1) à appliquer une couche d'un adhésif sensible à la pression accrocheur à une toile support flexible à faible adhérence,
2) à appliquer un film polymère décoratif à la couche d'adhésif sensible à la pression accrocheur,
3) à découper des motifs graphiques dans l'adhésif polymère décoratif et l'adhésif sensible à la pression accrocheur sans découper la toile support,
4) à retirer et à jeter le rebut supportant l'adhésif entre les motifs graphiques,
5) à appliquer une couche d'adhésif sensible à la pression détachable à une feuille polymère transparente qui est perforée sur sa surface entière, et
6) à faire adhérer la feuille polymère transparente et perforée aux faces exposées des motifs graphiques à l'aide de la couche de l'adhésif sensible à la pression détachable.

17. Procédé d'application de motifs graphiques à un substrat, procédé qui comprend la réalisation de six étapes selon la revendication 16 suivie par les étapes consistant :
7) à éliminer la toile support, exposant ainsi l'adhésif sensible à la pression accrocheur,
8) à mouiller les surfaces adhésives exposées et le substrat avec une solution détergent/alcool/eau,
9) à placer les surfaces adhésives mouillées contre le substrat mouillé
10) à laisser la solution s'évaporer par les orifices de la feuille polymère transparente et, lorsqu'une limite transparente apparaît au niveau des bords des motifs graphiques,
11) à détacher la feuille polymère perforée portant l'adhésif pour exposer les motifs graphiques.

18. Procédé d'application de motifs graphiques à un substrat selon la revendication 17 et comprenant de plus, après l'étape 9), l'étape de repositionnement des motifs graphiques sur le substrat.
